Europäisches Patentamt

**European Patent Office**

Office européen des brevets

(11) Numéro de publication: **0 229 548**
**B1**

(12) **FASCICULE DE BREVET EUROPEEN**

(45) Date de publication du fascicule du brevet:
**27.12.89**

(51) Int. Cl.⁴: **G21C 7/10**, G21C 3/32,
F16L 37/02

(21) Numéro de dépôt: **86402642.2**

(22) Date de dépôt: **28.11.86**

(54) Guide de grappe à dispositif de centrage et de positionnement antivibratoire pour réacteur nucléaire.

(30) Priorité: **29.11.85 FR 8517686**

(43) Date de publication de la demande:
**22.07.87 Bulletin 87/30**

(45) Mention de la délivrance du brevet:
**27.12.89 Bulletin 89/52**

(84) Etats contractants désignés:
**AT BE CH DE ES GB IT LI NL SE**

(56) Documents cités:
**FR-A- 2 070 028**
**FR-A- 2 397 043**
**GB-A- 1 170 921**
**US-A- 4 229 259**

(73) Titulaire: **FRAMATOME, Tour Fiat 1, Place de la Coupole,
F-92400 Courbevoie(FR)**

(72) Inventeur: **Desfontaines, Guy, 18 rue Jean Jaurès,
F-92800 Puteaux(FR)**
Inventeur: **Babin, Michel, 148 avenue Jean Jaurès,
F-93500 Pantin(FR)**

(74) Mandataire: **Fort, Jacques et al, CABINET
PLASSERAUD 84, rue d'Amsterdam, F-75009 Paris(FR)**

## Description

La présente invention concerne les équipements internes supérieurs pour réacteur nucléaire et elle trouve une application particulièrement importante dans les réacteurs refroidis et modérés par de l'eau. On connaît déjà de tels réacteurs dans lesquels le coeur, constitué par juxtaposition d'assemblages combustibles, est surmonté par des équipements internes supérieurs comportant une plaque inférieure munie d'ouvertures de sortie de réfrigérant hors des assemblages, une plaque supérieure, des colonnes support reliant les plaques, et des guides tubulaires desforés regardes ouverturs et destinés à des grappes de commande déplaçables verticalement entre une position où elles sont insérées dans le coeur et une position où elles sont extraites de ce dernier, ces guides étant individuellement fixés à la plaque supérieure et étant munis chacun d'un dispositif de guidage et de centrage de leur partie basse sur la plaque inférieure de coeur.

Les guides de grappes de commande ont pour fonction de guider les crayons de la grappe, d'éviter leur déformation, et de protéger ces crayons quelle que soit leur position lors du fonctionnement normal du réacteur et en cas d'incident. Ils comportent en général un tube le long duquel sont réparties, à sa partie haute, des plaques transversales, fréquemment appelées "cartes" guidant individuellement les crayons et, à sa partie basse, des tubes fendus affectés chacun à un crayon. Des guides de ce genre sont décrits par exemple dans les documents US-A 4 173 513 (OBERMEYER et al), EP-A 0 128 091 (FR-A 2 547 100) de FRAMATOME, et EP-A 0 060778 (FR-A 2 501 892) de FRAMATOME.

Divers dispositifs de guidage et de centrage du guide par rapport à la plaque inférieure de l'équipement interne sont connus. Ils sont en général conçus de façon que les guides conservent la possibilité de se déplacer axialement, notamment pour permettre leur libre dilatation en service ou pour faciliter leur montage ou leur démontage éventuel, tout en fermant les jeux de guidage de façon que les guides ne vibrent pas sous l'effet de la turbulence générée par le fluide réfrigérant et tout en limitant les possibilités de déflexion latérale des guides en cas de séisme ou de dépressurisation accidentelle du réacteur, due à la rupture d'une tuyauterie de collecte du fluide réfrigérant à la sortie du coeur, cela afin que les guides conservent un alignement correct par rapport aux assemblages combustibles et continuent à permettre aux grappes de commande de se déplacer librement. Ces dispositifs de guidage sont souvent constitués d'organes élastiques qui présentent l'inconvénient d'assurer simultanément l'ensemble des fonctions précédentes. Leur conception s'avère alors délicate, car ils doivent à la fois être suffisamment souples pour s'accommoder au montage des défauts d'alignement résultant des tolérances de fabrication sur les guides eux-mêmes et les plaques inférieure et supérieure des équipements internes supérieurs et suffisamment rigides pour empêcher la vibration des guides et surtout leur déflexion en cas de sollicitations accidentelles.

C'est par exemple le cas du dispositif de centrage constitué par une broche fendue, s'engageant dans un trou de la plaque inférieure, décrit par le document US-A-4 173 513 déjà mentionné. Ces dispositifs connus exigent un positionnement précis pour que les organes élastiques s'engagent dans les trous prévus dans la plaque inférieure sans que cela engendre au montage des contraintes excessives dans les organes élastiques.

La présente invention vise à fournir un guide de grappe pour équipements internes supérieurs répondant mieux que ceux antérieurement connus aux exigences de la pratique, notamment en ce que la fonction de centrage élastique est dissociée de la fonction de limitation des mouvements de déflexion radiale en cas d'accidents (tels que dépressurisation brutale ou séisme).

Dans ce but, l'invention propose notamment un guide dont le dispositif de centrage dans une ouverture de la plaque inférieure, comprend un jeu de plusieurs lames rigides portées par la partie basse du guide, réparties angulairement autour de l'axe du guide et pouvant s'engager dans l'ouverture avec un jeu radial, et un jeu de plusieurs lames flexibles intercalées entre lesdites lames rigides et également fixées à la partie basse, ayant une forme au repos telle qu'elles prennent un appui élastique sur le bord de l'ouverture.

On voit que cette disposition dissocie la fonction de centrage, et d'absorption des jeux de montage assurée par les lames élastiques, de celle de limitation des déflexions latérales assurée par les lames rigides. La déflexion du guide de grappe et les contraintes de flexion dans les lames élastiques sont ainsi réduites.

Les deux jeux de lames sont avantageusement portés par un pied rapporté sur le corps du guide. A condition que les surfaces en contact du corps et du pied soient de révolution, il est possible de monter le pied, après les éléments de guidage continu des crayons de la grappe, dans une orientation appropriée quelconque.

Le pied ou la plaque inférieure comporte avantageusement des moyens destinés à retenir les lames flexibles en cas de rupture de ces dernières et à les empêcher de migrer dans le circuit de refroidement primaire du réacteur.

L'invention sera mieux comprise à la lecture de la description qui suit de modes particuliers d'exécution, donnés à titre d'exemples non limitatifs. La description se réfère aux dessins qui l'accompagnent, dans lesquels :

- la figure 1 est une vue simplifiée, en coupe verticale, de la partie supérieure d'un réacteur auquel peut être appliquée l'invention,
- la figure 2 est une vue en coupe suivant la ligne II-II de la figure 4, montrant, à grande échelle, un dispositif de guidage suivant l'invention applicable au réacteur de la figure 1,
- les figures 3 et 4 sont des vues en coupe suivant les lignes III-III et IV-IV de la figure 2,
- les figures 5 et 6, similaires à la figure 4, montrent des variantes de réalisation.

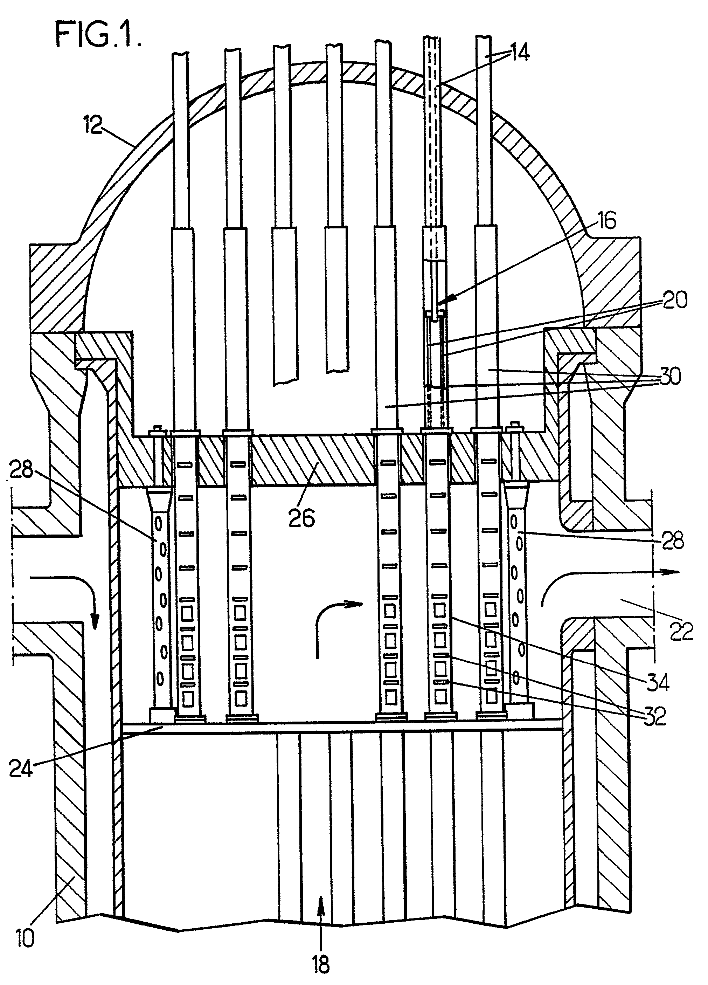

L'invention sera décrite, à titre d'exemple, dans son application à un réacteur du type à eau sous pression du genre montré en figure 1. Le réacteur montré en figure 1 comporte une cuve 10 de résistance à la pression de l'eau constituant réfrigérant et modérateur. La cuve est fermée par un couvercle 12 qui porte les mécanismes 14 de déplacement des grappes de commande dont une seule 16 est représentée. La cuve 10 contient le coeur 18 formé par juxtaposition d'assemblages ayant chacun un squelette et un faisceau de crayons combustibles répartis suivant un réseau régulier, carré ou triangulaire. Le squelette de assemblages comporte des tubes guides (non représentés) dans lesquels peuvent coulisser des crayons absorbants 20 appartenant aux barres de commande (ou éventuellement à des barres de variation du spectre d'énergie des neutrons).

Le coeur est surmonté d'un ensemble mécanosoudé qu'on désigne généralement par le terme d'équipements internes supérieurs. Cet ensemble remplit plusieurs fonctions. Il collecte le débit d'eau à haute température sortant du coeur et le dévie vers la tubulure 22 de sortie de la cuve 10. Il retient et assure le centrage relatif des assemblages combustibles 18. Enfin, il doit assurer le guidage des grappes de commande 16 équipant certains au moins des assemblages au cours de leur déplacement vertical.

Les équipements internes supérieurs montrés en figure 1 comportent une plaque inférieure 24 qui reçoit la poussée des assemblages et une plaque supérieure 26 qui reporte la résultante des forces appliquées à l'ensemble des équipements internes supérieurs sur la cuve 10. Les plaques 24 et 26 sont reliées par des colonnes entretoises 28 de forme tubulaire, percées de larges ouvertures destinées à la circulation du réfrigérant. Enfin, des guides 30 de grappes 16 s'étendent à partir de la plaque inférieure 24, jusqu'à la plaque supérieure 26 et au-delà de cette dernière. Ces guides comprennent généralement un fourreau 34 dont la partie haute est fixée de façon rigide à la plaque supérieure 26, dans lequel glisse la pièce (fréquemment appelée "araignée") à laquelle sont fixés les crayons 20. Des plaques transversales 32, souvent appelées "cartes", percées d'ouvertures livrant passage à l'araignée et aux crayons, assurent un guidage discontinu de ces derniers. A la partie inférieure du guide, les crayons sont guidés de façon continue par des tubes fendus 36 ou des organes équivalents. Pour permettre la dilatation relative des guides et des équipements internes supérieurs, les guides sont généralement simplement guidés chacun dans une ouverture 38 de la plaque inférieure 24.

La disposition qui vient d'être décrite est connue dans son ensemble, et on en trouvera une description dans les documents déjà cités et par exemple dans le document EP-A 0 128 091 (FR-A 2 547 100) ou EP-A 0 060 778 ( FR-A 2 501 892).

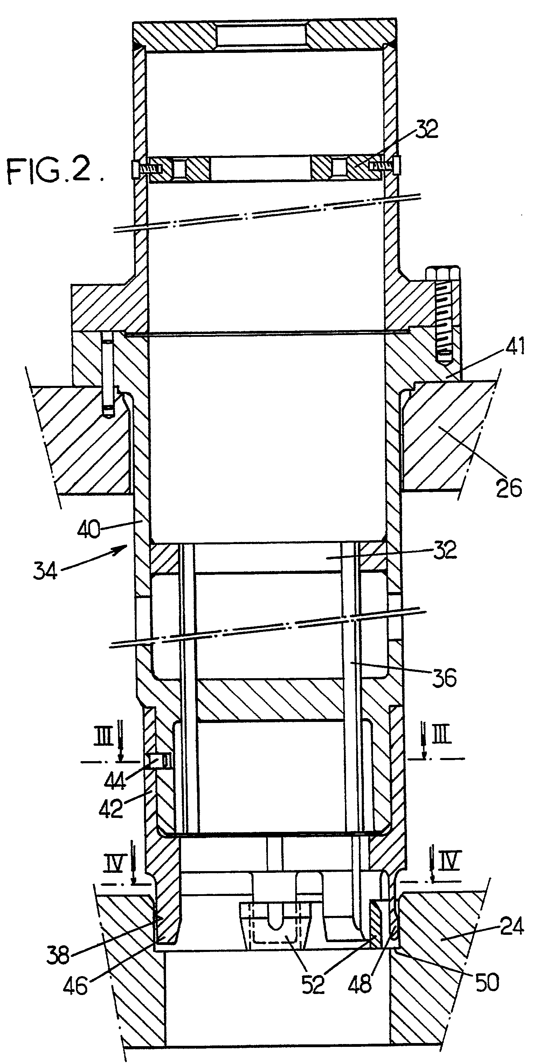

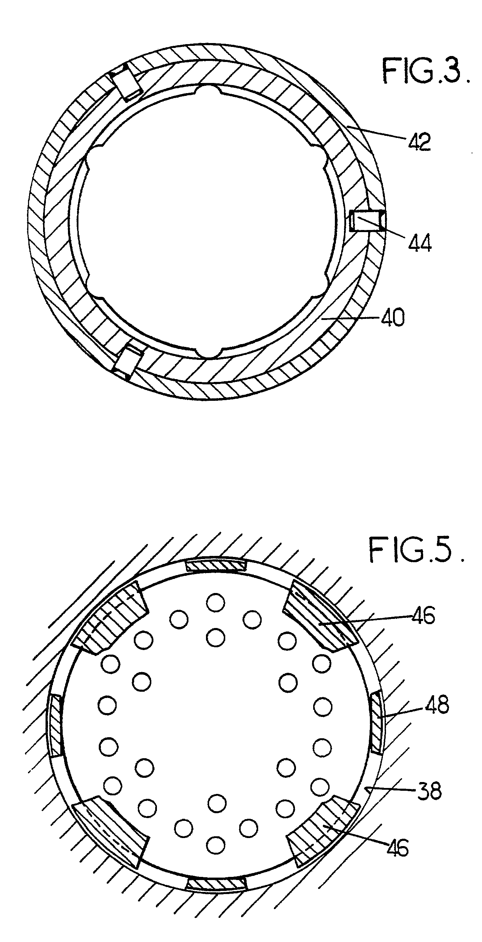

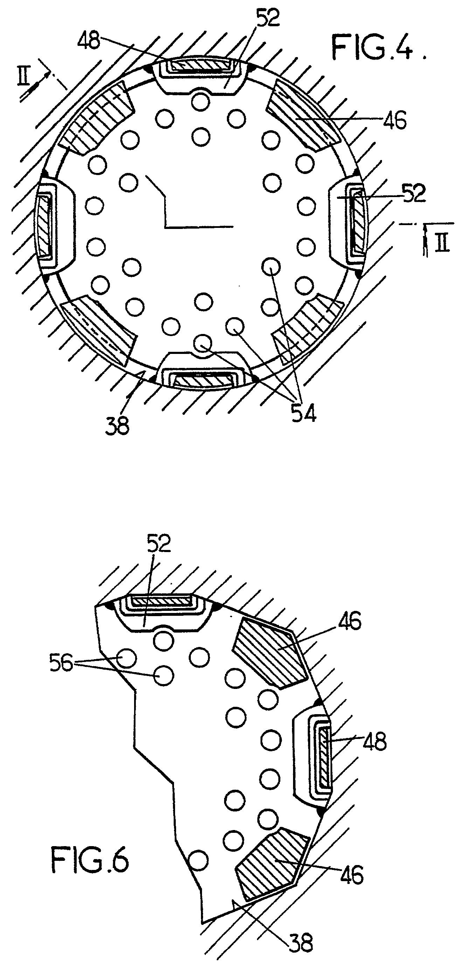

Dans le mode de mise en oeuvre de l'invention qui est représenté en figures 2 à 4, le fourreau 34 du guide comporte un corps tubulaire 40 dont l'extrémité haute est munie d'une bride 41 de fixation sur la plaque supérieure 26 et un pied 42 emmanché sur la partie inférieure du corps et fixé à cette dernière par des pions 44 (figures 2 et 3). La partie inférieure du pied est usinée de façon à constituer un jeu de lames rigides 46 et un jeu de lames flexibles 48. Dans le mode de réalisation montré en figure 4, les lames des deux jeux sont alternées et réparties à intervalles angulaires égaux. L'ouverture 38 est de forme cylindrique et elle présente un épaulement 50 de retenue éventuelle du pied 42.

Les lames rigides sont délimitées radialement vers l'extérieur par des portions de surface cylindrique ayant un diamètre inférieur à celui de l'ouverture 38 de façon à laisser subsister un jeu radial de l'ordre du mm. Cette valeur est un compromis entre les tolérances de fabrication et les tolérances d'alignement des guides et des assemblages combustibles. Les lames flexibles présentent une partie mince, destinée à leur donner l'élasticité requise, et un bourrelet terminal que l'élasticité de la lame tend à appliquer contre la paroi de l'ouverture 38. Le nombre des lames dans chaque jeu peut être supérieur à quatre et en général ces lames seront en nombre pair.

Pour éviter qu'en cas de rupture d'une lame flexible cette dernière ne soit entraînée par le réfrigérant, des moyens de retenue individuelle des lames sont avantageusement prévus. Dans le mode de réalisation montré en figures 2 et 4, ces moyens comprennent des pontets 52 fixés à la paroi de l'ouverture 38, par exemple par soudage, et entourant chacun une des lames flexibles. Des échancrures peuvent être ménagées dans certains de ces pontets et/ou dans certaines des lames épaisses rigides 46 pour éviter qu'elles n'entrent en contact avec des crayons appartenant aux grappes de commande, tels que les crayons 54 dont la répartition est montrée schématiquement sur la figure 4.

Lorsque, comme dans le mode de réalisation montré en figures 2 à 4, les surfaces en contact du pied 42 et du corps 40 sont de révolution, le pied peut être calé angulairement sur le corps dans l'orientation appropriée pour qu'elle corresponde à l'emplacement des pontets 52, après montage de la carte 32 qui porte les tubes de guidage continu 36.

La variante de réalisation montrée en figure 5 se différencie de celle de la figure 4 uniquement par l'absence de pontéts. Celle de la figure 6 comporte une ouverture 38 à section droite non plus circulaire, mais polygonale, chacun des lames épaisses 46 correspondant à un angle du polygone. Cette disposition assure le maintien de la partie basse du guide de grappe en rotation autour de l'axe du guide.

**Revendications**

1. Guide de grappe pour un réacteur nucléaire ayant des équipements internes supérieurs comportant une plaque inférieure (24) munie d'ouvertures (38) de sortie du réfrigérant hors des assemblages combustibles, une plaque supérieure (26), des colonnes support (28) reliant les plaques et des guides tubulaires (34) disfoses en regard destinés ouvertous (38) et destinés à des grappes de commande déplaçables verticalement entre une position où elles sont insérées dans le coeur et une position où elles sont extraites de ce dernier, ces guides (34) étant individuellement fixés à la plaque supérieure et étant munis chacun d'un dispositif de guidage et de centrage de leur partie basse sur la plaque inférieure (24) de coeur, caractérisé en ce que ledit dispositif comprend un jeu de plusieurs lames rigides (46) portées par le partie basse du guide, réparties angulairement autour de l'axe du guide et pouvant s'engager dans l'ouverture avec un jeu radial, et un jeu de plusieurs lames flexibles (48) intercalées entre lesdites lames rigides et également fixées à la partie basse, ayant une forme au repos telle qu'elles prennent un appui élastique sur le bord de l'ouverture.

2. Dispositif selon la revendication 1, caractérisé en ce que l'ouverture (38) et les jeux de lames (46,48) présentent une symétrie de révolution autour de l'axe du guide (30).

3. Dispositif selon la revendication 2, caractérisé en ce que l'ouverture est de forme cylindrique.

4. Dispositif selon la revendication 2, caractérisé en ce que l'ouverture (38) est de forme polygonale, chaque angle du polygone correspondant à l'une des lames rigides (46).

5. Dispositif selon l'une quelconque des revendications précédentes, caractérisé en ce que les deux jeux de lames (46,48) sont portés par un pied (42) rapporté sur le corps du guide.

6. Dispositif selon la revendication 5 caractérisé en ce que le pied et les lames constituent un ensemble monobloc.

7. Dispositif selon la revendication 5 ou 6, caractérisé en ce que les surfaces en contact du corps (40) et du pied (42) sont de révolution et en ce que le pied est muni de moyens (44) de fixation sur le corps dans une orientation ajustable.

8. Dispositif selon l'une quelconque des revendications précédentes, caractérisé en ce que la plaque inférieure comporte des moyens (52) destinés à retenir les lames flexibles (48) en cas de rupture de ces dernières et les empêcher de migrer dans le circuit primaire du réacteur.

9. Dispositif selon la revendication 8, caractérisé en ce que les dits moyens sont constitués par des pontets (52) associés chacun à une lame flexible (48) et fixés à la paroi de l'ouverture (38).

## Claims

1. Cluster guide for a nuclear reactor having upper internals comprising a lower plate (24) formed with openings (38) for coolant flow out of the fuel assemblies, an upper plate (26), support columns (28) connecting the plates together and tubular guides (34) confronting said openings (38) and intended for control clusters vertically movable between a position in which they are inserted in the core and a position where they are out of the core, said guides (34) being fixed individually to the upper plate and each being provided with a device for guiding and centering the lower part thereof onto the lower core plate (24), characterized in that said device comprises a set of a plurality of rigid blades (46) carried by the lower part of the guide, spaced apart angularly about the axis of the guide and arranged for engagement into the opening with a radial clearance and a set of a plurality of flexible blades (48) interleaved with said rigid blades and also fixed to the lower part, having a shape at rest such that they bear resiliently on the edge of the opening.

2. Device according to claim 1, characterized in that the opening (38) and the sets of blades (46, 48) have a rotational symmetry about the axis of the guide (30).

3. Device according to claim 2, characterized in that the opening is cylindrical in shape.

4. Device according to claim 2, characterized in that the opening (38) is polygonal in shape, each angle of the polygone corresponding to one of the rigid blades (46).

5. Device according to any one of the preceding claims, characterized in that the two sets of blades (46, 48) are carried by a foot (42) fixed to the body of the guide.

6. Device according to claim 5, characterized in that the foot and the blades constitute an integral unit.

7. Device according to claim 5 or 6, characterized in that the mutually contacting surfaces of the body (40) and of the foot (42) have a circular cross-section and in that the foot is provided with means (44) for securing it on the body in an adjustable angular position.

8. Device according to any one of the preceding claims, characterized in that the lower plate comprises means (52) for retaining the flexible blades (48) upon breakage of the latter and for preventing them from migrating into the primary circuit of the reactor.

9. Device according to claim 8, characterized in that said means consist of bridges (52) each associated with a flexible blade (48) and each fixed to the wall of the opening (38).

## Patentansprüche

1. Stabbündelführung für einen Nuklearreaktor mit oberen inneren Ausrüstungen, welche eine untere, mit Öffnungen (38) zum Austritt von Kühlmittel aus den Brennstsbanordnungen versehene Platte (24), eine obere Platte (26), die Platten verbindenden Stützstäbe (28) und rohrförmige Führungen (34) aufweisen, die den Öffnungen (38) gegenüberstehend angeordnet und für die Steuerstabbündel vorgesehen sind, die vertikal zwischen einer Stellung, in der sie in den Kern eingeführt sind, und einer Stellung, in der sie aus letzterem herausgezogen sind, verschiebbar sind, wobei die Führungen (34) einzeln an der oberen Platte befestigt und jeweils mit einer Führungs- und Zentrierungsvorrichtung an ihrem unteren Bereich auf der unteren Platte (24) des Kerns versehen sind, dadurch gekennzeichnet, daß die Vorrichtung einen Satz mehrerer starrer Lamellen (46), welche vom unteren Teil der Führung getragen, winkelförmig versetzt um die Achse der Führung angeordnet und mit einem radialen Spiel in die Öffnung eingreifbar sind, und einen Satz mehrerer flexibler Lamellen (48) aufweist, die zwischen den starren Lamellen angeordnet, gleichermaßen am unteren Bereich befestigt sind und eine solche Ruheform aufweisen, daß sie eine elastische Stütze am Rand der Öffnung bilden.

2. Vorrichtung nach Anspruch 1, dadurch gekennzeichnet, daß die Öffnung (38) und der Satz der Lamellen (46, 48) eine drehsymmetrische Anordnung um die Achse der Führung (30) aufweisen.

3. Vorrichtung nach Anspruch 2, dadurch gekennzeichnet, daß die Öffnung die Form eines Zylinders aufweist.

4. Vorrichtung nach Anspruch 2, dadurch gekennzeichnet, daß die Öffnung (38) eine polygonale Form aufweist, wobei jeder Winkel des Polygons dem Winkel einer der starren Lamellen (46) entspricht.

5. Vorrichtung nach einem der vorangehenden Ansprüchen, dadurch gekennzeichnet, daß beide Sätze von Lamellen (46, 48) von einem an den Körper der Führung angefügten Fuß (42) getragen sind.

6. Vorrichtung nach Anspruch 5, dadurch gekennzeichnet, daß der Fuß und die Lamellen einstückig ausgebildet sind.

7. Vorrichtung nach Anspruch 5 oder 6, dadurch gekennzeichnet, daß die in Verbindung stehenden Oberflächen des Körpers (40) und des Fußes (42) rotationssymmetrisch sind, und daß der Fuß mit Fixiereinrichtungen auf dem Körper in einer einregulierbaren Richtung versehen ist.

8. Vorrichtung nach einem der vorangehenden Ansprüchen, dadurch gekennzeichnet, daß die untere Platte Einrichtungen (52) zum Zurückhalten der flexiblen Lamellen (48) im Falle eines Zerbrechens derselben und zum Verhindern eines Wanderns derselben im primären Kreislauf des Reaktors aufweist.

9. Vorrichtung nach Anspruch 8, dadurch gekennzeichnet, daß die Einrichtungen von Bügeln (52) gebildet sind, welche jeweils mit einer flexiblen Lamelle (48) verbunden und an der Wand der Öffnung (38) befestigt sind.

# FIG.1.

FIG.2.

FIG.3.

42

44

40

FIG.5.

46

48

38

46

FIG.4.

FIG.6